# EUROPÄISCHE PATENTSCHRIFT

(11) **EP 2 442 991 B1**
(45) Veröffentlichungstag und Bekanntmachung des Hinweises auf die Patenterteilung: **04.09.2013**
(21) Anmeldenummer: 10723531.9
(22) Anmeldetag: 29.05.2010
(51) Int. Cl.: B60G 7/00, B62D 17/00

(54) **VORRICHTUNG ZUM VERSTELLEN VON STURZ UND/ODER SPUR DER RÄDER EINER RADAUFHÄGUNG**
DEVICE FOR ADJUSTING CAMBER AND/OR TOE OF THE WHEELS OF A WHEEL SUSPENSION
DISPOSITIF DE RÉGLAGE DU CARROSSAGE ET/OU DU PARALLÉLISME DES ROUES D'UNE SUSPENSION

(30) Priorität: 19.06.2009 DE 102009025586
(43) Veröffentlichungstag der Anmeldung: 25.04.2012
(73) Patentinhaber: Audi AG, 85045 Ingolstadt (DE)
(72) Erfinder: MICHEL, Wilfried, 93339 Riedenburg (DE); MEITINGER, Karl-Heinz, 81667 München (DE); KOSSIRA, Christoph, 85053 Ingolstadt (DE); MÜLLER, Hugo, 86701 Rohrenfels-Ballersdorf (DE)
(74) Vertreter: Asch, Konrad
(86) Internationale Anmeldenummer: PCT/EP2010/003288
(87) Internationale Veröffentlichungsnummer: WO 2010/145752

(56) Entgegenhaltungen:
- EP-A2- 1 728 653
- WO-A1-98/16418
- DE-A1-102004 049 296
- DE-A1-102008 011 367
- JP-A- 2007 261 555

## Beschreibung

Die Erfindung betrifft eine Vorrichtung zum Verstellen von Sturz und/oder Spur der Räder einer Radaufhängung, insbesondere für Kraftfahrzeuge, gemäß dem Oberbegriff des Patentanspruches 1.

Eine derartige Radaufhängung ist allgemein bekannt und zeigt einen Aufbau, bei dem die den Sturz und/oder die Spur der Räder bestimmenden Stellzylinder über zwei Stelltriebe und zwei Elektromotoren in beiden Drehrichtungen gegensinnig oder gleichsinnig verstellt werden. Für die Verstellung der Hinterräder von Radaufhängungen sind in der Regel nur wenige Winkelgrade zur Korrektur der Spur und/oder des Sturzes erforderlich, wobei der Aufwand über zwei Stelltriebe und zwei Elektromotoren nicht unbeträchtlich ist.

Aus der gattungsbildenden DE 10 2004 049 296 A1 ist eine in einem Radträger gelagerte Nabeneinheit für ein Rad eines zweispurigen Fahrzeuges mit einem um eine Radachse drehbar gelagerten Radflansch bekannt. Konkret ist hier die Nabeneinheit unter Zwischenschaltung eines kreiszylindrischen Verstellrings, dessen Zylinderachse zur Achse des Rades schräg gestellt ist, gegenüber dem Radträger um diese Zylinderachse drehbar im Radträger gelagert. Weiter ist der Verstellring in einem Komplementärring gelagert, der den Verstellring umgibt und diesem geometrisch derart angepasst ist, dass der Verstellring um seine Zylinderachse gegenüber dem Komplementärring drehbar ist, wobei der Komplementärring um eine sogenannte Neutralachse, die in einer Grundposition des Verstellrings mit der Radachse zusammenfällt, drehbar letztlich im Radträger gelagert ist. Der Verstellring und der Komplementärring sind derart gelagert, dass insbesondere mit einer einen negativen Radsturz erzeugenden oder vergrößernden Verdrehung des Verstellrings eine Verlagerung des Radflansches nach außen, annähernd in Richtung der Radachse erfolgt. Zum Verdrehen des Verstellrings bzw. des Komplementärrings ist eine Verstelleinheit mit einem Aktuator vorgesehen.

Weiter ist aus der EP 1 728 653 A2 eine Radaufhängung bekannt, die eine lösbare an einem Lenker befestigte Radlagereinheit aufweist, die wiederum einen Achszapfen aufweist. An dem Lenker ist eine Trägerplatte zur Befestigung der Radlagereinheit vorgesehen, wobei der Achszapfen einen Anlagekopf aufweist, welcher unter dem Einfluss einer Druckplatte in einer Aufnahme der Trägerplatte gelenkig abgestützt ist.

Aufgabe der Erfindung ist es, eine Vorrichtung zum Verstellen von Sturz und/oder Spur der Räder einer Radaufhängung vorzuschlagen, die mit einem fertigungstechnisch und steuerungstechnisch geringeren Aufwand herstellbar ist.

Diese Aufgabe wird gelöst mit den Merkmalen des Anspruchs 1. Vorteilhafte Weiterbildungen der Erfindung sind Gegenstand der Unteransprüche.

Gemäß Anspruch 1 weist eine Vorrichtung zum Verstellen von Sturz und/oder Spur der Räder von Radaufhängungen, insbesondere für Kraftfahrzeuge, einen Radträger auf, an dem das jeweilige Rad drehbar gelagert ist und der ein das Rad aufnehmendes Trägerteil und ein mit der Radaufhängung verbundenes Führungsteil aufweist. Zwischen dem Trägerteil und dem Führungsteil sind zwei mittels einer Betätigungseinrichtung betätigbare und um eine Drehachse verdrehbare sowie eine Art Stellzylinder ausbildende Drehteile angeordnet, die zur Veränderung von Sturz und/oder Spur bei deren Drehbetätigung eine definierte Verlagerung von dem Trägerteil und/oder dem Führungsteil bewirken. Weiter ist vorgesehen, dass zur Betätigung der Drehteile ein einziger Stellantrieb vorgesehen ist, mittels dem die beiden Drehteile gleichzeitig in unterschiedliche, insbesondere in entgegengesetzte Richtung verstellbar sind. Erfindungsgemäß wird vorgeschlagen, dass die Drehteile einander zugewandte, geneigte Schrägflächen aufweisen. Diese Schrägflächen sind in einem definierten Abstand zueinander angeordnet und mit je einer Stirnverzahnung versehen, in die ein Antriebszahnrad eines bevorzugt mit seiner Antriebswelle im Wesentlichen senkrecht zur Drehachse der Drehteile ausgerichteten Stellantriebs, zum Beispiel Elektromotors, einragt und mit beiden Stirnverzahnungen in Eingriff ist. Die Positionierung der stirnverzahnten Schrägflächen relativ zum Antriebszahnrad des zum Beispiel Elektromotors als Stellantrieb kann auf einfache Weise so erfolgen, dass bei einer gegensinnigen Verstellung entweder der Spurwinkel oder der Sturzwinkel oder aber auch beide zugleich gezielt verstellbar sind.

Die erfindungsgemäße Vorrichtung benötigt weiter auch nur einen Stelltrieb und kommt daher mit weniger Bauteilen und einem verringerten Steuerungsaufwand aus. Dadurch lässt sich die erfindungsgemäße Vorrichtung wesentlich einfacher und preiswerter herstellen. Die Drehteile sind funktionsbedingt zwar in beiden Drehrichtungen, aber nur gegensinnig verstellbar. Besonders vorteilhaft wird hiermit stets eine Schwenkbewegung der Raddrehachse in einer Ebene erzielt, und nicht im Raum; das heißt, es findet kein Taumeln statt, sondern nur ein Verschwenken in einer Schwenkebene, um den Sturz und/oder die Spur der Räder von Radaufhängungen zu verstellen. Je nach dem, in welcher Winkelposition der Stellmotor in der Radschüssel in seiner Ausgangslage angeordnet ist, wird diese Ebene, in der die Schwenkbewegung der Raddrehachse stattfindet, definiert: so ist es beispielsweise möglich, über diese Anordnung des Stellmotors entweder eine reine Spurverstellung oder eine reine Sturzverstellung zu verwirklichen. Selbstverständlich kann der Stellmotor und damit auch die Schwenkebene so angeordnet werden, dass sich die beiden Effekte kombinieren lassen, das heißt das die Raddrehachsenveränderung hier auch gleichzeitig zu einer Spur- und Sturzänderung führen könnte.

Der Stellantrieb ist erfindungsgemäβ durch einen Stellmotor gebildet, der zum Beispiel grundsätzlich hydraulisch oder pneumatisch betrieben werden könnte. Besonders bevorzugt ist jedoch ein Aufbau mit einem kompakten, steuerungstechnisch einfach handhabbaren und funktionssicher betreibbaren Elektromotor.

Zur Erzielung robuster und weitgehendst spielfreier Zahneingriffe wird ferner vorgeschlagen, dass die Stirnverzahnungen und die Verzahnung des Antriebszahnrades kegelig und/oder die Verzahnung als Schrägverzahnung ausgeführt sind.

Des Weiteren kann der Stellantrieb mit seinem Gehäuse an einem zur Drehachse der Drehteile achsparallel ausgerichteten Ausleger des Trägerteiles befestigt sein. Der Stellantrieb kann somit in bevorzugter Weise mit dem Trägerteil bei Verstellbewegungen mitschwenken, wodurch komplizierte Ausgleichseinrichtungen wie Schiebeführungen, etc. entfallen können.

Das Trägerteil und das Führungsteil des Radträgers können mit jeweils zwei achsparallel und diametral gegenüberliegenden Auslegern ausgeführt sein, die bevorzugt um 90 Grad umfangsversetzt zueinander ausgerichtet sind und an denen über Lagerbolzen ein Stützring kardanisch angelenkt ist. Bevorzugt verläuft dann zur besonders biegesteifen, kompakten Abstützung der Stellkräfte und -momente die Antriebswelle des Stellantriebs durch den Ausleger und den Stützring.

Dabei kann ferner die Antriebswelle des Stellantriebs in dem Ausleger und/oder dem Stützring drehbar gelagert sein. Weiter kann die Antriebswelle in baulich besonders einfacher Weise unmittelbar einen der Lagerbolzen für den Stützring bilden.

Schließlich können zur Erzielung einer stabilen, den Anforderungen an eine Radführung besonders entsprechenden Lagerung die Drehteile über radial nach innen ragende Flanschabschnitte an dem Trägerteil und an dem Führungsteil angeordneten Achsstummeln drehbar gelagert sein, wobei die Flanschabschnitte durchmessergrößere Ringbunde der Achsstummel hintergreifen.

Ein Ausführungsbeispiel der Erfindung ist im Folgenden mit weiteren Einzelheiten näher erläutert. Die schematische Zeichnung zeigt in:
- **Fig. 1**: eine Radaufhängung für Kraftfahrzeuge mit einem mehrteiligen, an Radführungselementen angelenkten Radträger, dessen Rad über zwei verdrehbare Drehteile verstellbar ist, wobei die Drehteile gegensinnig mittels eines in den **Fig. 2** **und** **3** dargestellten Stellantriebes verdrehbar sind,
- **Fig. 2**: den Radträger gemäß **Fig. 1** mit stirnradverzahnten Drehteilen, die mittels eines zur Drehachse der Drehteile senkrecht angeordneten Elektromotors über ein Antriebsritzel gegensinnig verdrehbar sind, und
- **Fig.3**: einen Längsschnitt gemäß Linie III - III der **Fig. 2** durch den Radträger.

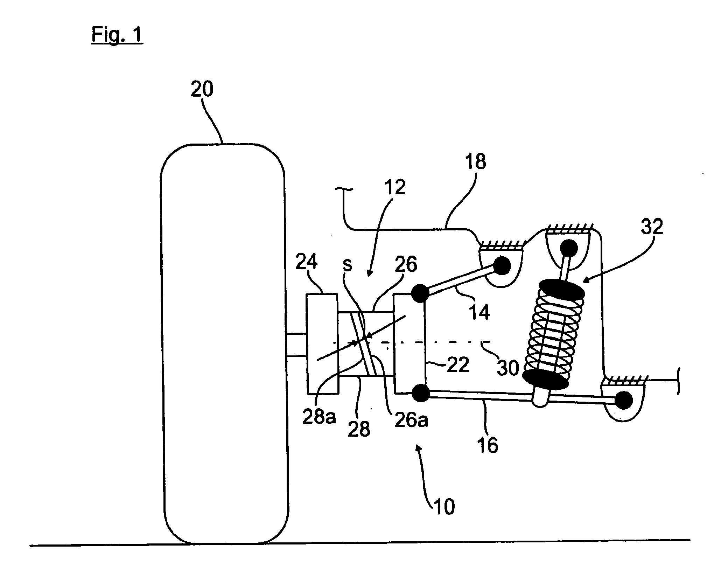

In der **Fig. 1** ist eine hintere Radaufhängung 10 für Kraftfahrzeuge grob schematisch dargestellt, bei der ein Radträger 12 über Querlenker 14, 16 als Radführungselemente an einem nur angedeuteten Aufbau 18 angelenkt ist.

Der das Rad 20 drehbar aufnehmende Radträger 12 ist unterteilt in ein an den Querlenkern 14, 16 angelenktes Führungsteil 22, ein das Rad 20 über ein entsprechendes Radlager (nicht dargestellt) aufnehmendes Trägerteil 24 und in zwei am Führungsteil 22 und am Trägerteil 24 um eine gemeinsame Drehachse 30 verdrehbar gelagerte Drehteile 26, 28.

Die beiden Drehteile 26, 28 weisen einander zugewandte, schräg zur Drehachse 30 ausgebildete Schrägflächen 26a, 28a auf, die in noch zu beschreibender Weise zusammenwirken und die bei einem gegensinnigen Verdrehen der Drehteile 26, 28 ein Verkippen des das Rad 20 tragenden Trägerteiles 24 beziehungsweise eine Verstellung der Spur und/oder des Sturzes des Rades 20 bewirken.

Die Radlast der Radaufhängung 10 ist in bekannter Weise über eine Tragfeder beziehungsweise ein Federbein 32 gegenüber dem Aufbau 18 abgestützt.

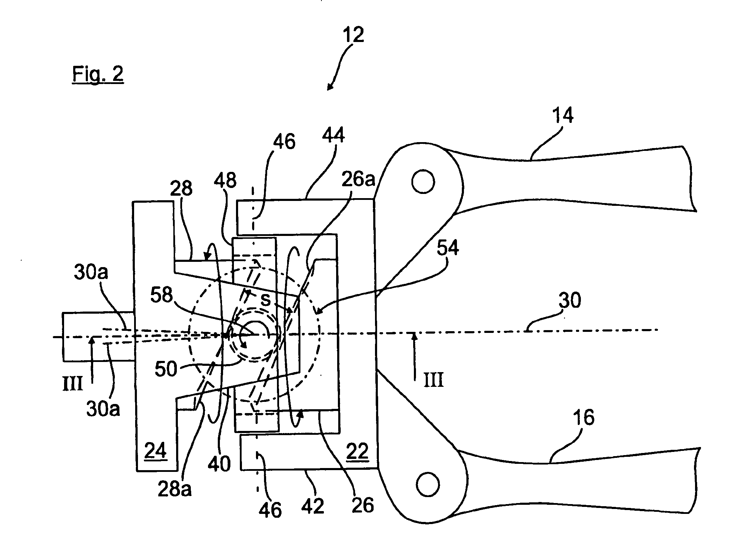

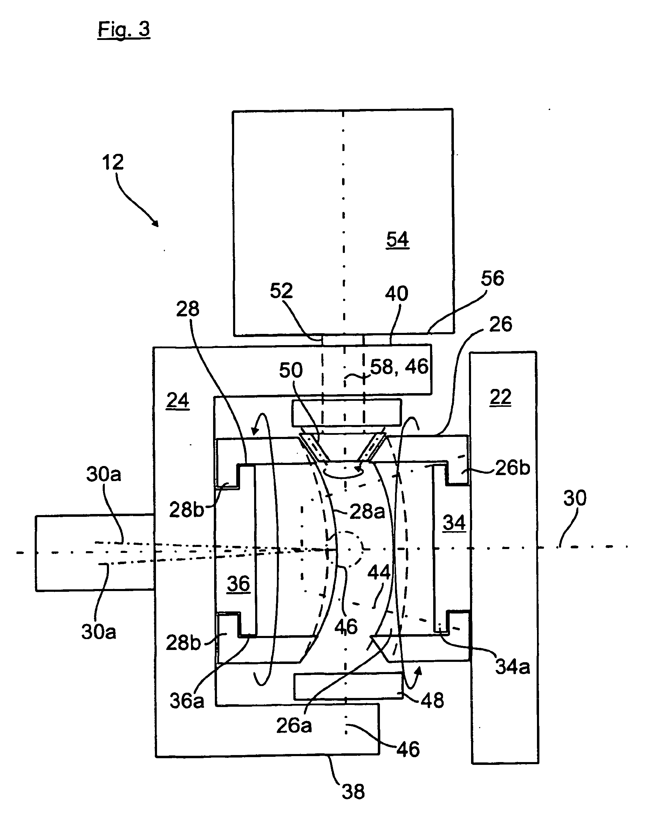

Die Drehteile 26, 28 (vgl. **Fig. 2** **und** **3**) sind auf Achsstummeln 34, 36 drehbar gelagert, wobei jeweils ein radial nach innen ragender Flanschabschnitt 26b, 28b der Drehteile 26, 28 in axialer Richtung formschlüssig einen durchmessergrößeren Ringbund 34a, 36a hintergreift. Die Achsstummel 34, 36 sind jeweils fest mit dem Führungsteil 22 und dem Trägerteil 24 verbunden, zum Beispiel in diese eingeschraubt.

Das Führungsteil 22 und das Trägerteil 24 sind ferner kardanisch gelenkig miteinander verbunden.

Dazu sind an dem Führungsteil 22 und an dem Trägerteil 24 einander zugewandte, achsparallel ausgerichtete und diametral sich gabelförmig gegenüber liegende Ausleger 42, 44 (am Führungsteil 22) beziehungsweise 38, 40 (am Trägerteil 24) vorgesehen, die über Lagerbolzen 46 (nur als gestrichelte Linie angedeutet) gelenkig mit einem Kardan- beziehungsweise Stützring 48 verbunden sind.

Durch die hier um 90 Grad zueinander umfangsversetzten Ausleger 38, 40 beziehungsweise 42, 44 und den Stützring 48 ist das Trägerteil 24 kardanisch beweglich am Führungsteil 22 gehalten, wobei die Drehteile 26, 28 derart angeordnet sind, dass ein definierter Abstand s zwischen den Schrägflächen 26a, 28a vorliegt.

Die besagten Schrägflächen 26a, 28a weisen jeweils eine kegelige Stirnverzahnung auf und wirken mit einem kegeligen Antriebsritzel 50 trieblich zusammen, das in den besagten Abstand s zwischen die Drehteile 26, 28 einragt.

Das Antriebsritzel 50 ist auf einer Antriebswelle 52 eines hier als Elektromotor 54 ausgebildeten Stellantriebs befestigt, dessen Gehäuse 56 bevorzugt an dem Ausleger 40 des Trägerteiles 24 befestigt ist. Die Drehachse 58 der Antriebswelle 52 des Elektromotors 54 ist dabei senkrecht zur Drehachse 30 der Drehteile 26, 28 ausgerichtet und liegt, wie ersichtlich, in einer gemeinsamen Mittelebene mit den Lagerbolzen 46 für den Stützring 48.

Die das Antriebsritzel 50 tragende Antriebswelle 52 (vgl. **Fig. 3**) des Elektromotors 54 erstreckt sich ferner durch den Ausleger 40 des Trägerteiles 24 und durch den Stützring 48 hindurch und ist in diesen drehbar gelagert, wobei die Antriebswelle 52 zugleich in einer Doppelfunktion auch den Lagerbolzen 46 als Schwenklagerung des Stützringes 48 ausbildet.

Bei einem gegensinnigen Verdrehen der beiden Drehteile 26, 28 über den Elektromotor 54 in der einen oder der anderen Drehrichtung wird das das Rad 20 tragende Trägerteil 24 verkippt, wobei dessen Raddrehachse 30a und damit die Winkelstellung des Rades 20 zur Spur- und/oder Sturzverstellung entsprechend der jeweiligen Lage der durch die Stirnflächen 26a, 28a der Drehteile 26, 28 aufgespannten Schrägungsebenen im Raum verschwenkt wird. Das heißt somit, dass die Beugungsachse, um welche die Raddrehachse 30a schwenkt, nicht von der Anordnung der Bolzenachsen des Kardangelenks abhängt, sondern einzig und allein von der Lage der zuvor beschriebenen Schrägungsebenen der Drehteile 26, 28 im Raum. Welche räumliche Anordnung das Kardangelenk einnimmt, spielt daher keine Rolle. Der an dem Trägerteil 24 beziehungsweise an dessen Ausleger 40 befestigte Elektromotor 54 wird dabei entsprechend mitverschwenkt.

Die Stirnverzahnungen an den Stirnflächen 26a, 28a der Drehteile 26, 28 und das Antriebsritzel 50 sind bevorzugt schrägverzahnt, um die Zahnüberdeckungen des Stelltriebes zu vergrößern.

## Patentansprüche

1. Vorrichtung zum Verstellen von Sturz und/oder Spur der Räder einer Radaufhängung (10), insbesondere für Kraftfahrzeuge, mit einem Radträger (12), an dem das jeweilige Rad (20) drehbar gelagert ist und der ein das Rad (20) aufnehmendes Trägerteil (24) und ein mit der Radaufhängung (10) verbundenes Führungsteil (22) aufweist, zwischen denen zwei mittels einer Betätigungseinrichtung betätigbare und um eine Drehachse (30) verdrehbare Drehteile (26, 28) angeordnet sind, die zur Veränderung von Sturz und/oder Spur bei deren Drehbetätigung eine definierte Verlagerung von dem Trägerteil (24) und/oder dem Führungsteil (22) bewirken, wobei zur Betätigung der Drehteile (26, 28) ein einziger Stellantrieb (54) vorgesehen ist, mittels dem die beiden Drehteile (26, 28) gleichzeitig in unterschiedliche, insbesondere in entgegengesetzte Richtung verstellbar sind, wobei der Stellantrieb (54) durch einen Stellmotor, insbesondere durch einen Elektromotor, gebildet ist, **dadurch gekennzeichnet,**
**dass** die Drehteile (26, 28) einander zugewandte, geneigte Schrägflächen (26a, 28a) aufweisen, und
**dass** die Schrägflächen (26a, 28a) in einem definierten Abstand (s) zueinander angeordnet und mit je einer Stirnverzahnung versehen sind, in die ein Antriebsritzel (50) des Stellmotors (54) einragt und mit beiden Stirnverzahnungen in Eingriff ist.

2. Vorrichtung nach Anspruch 1, **dadurch gekennzeichnet, dass** eine das Antriebsritzel (50) tragende Antriebswelle (52) des Stellantriebs (54) im Wesentlichen senkrecht zur Drehachse (30) der Drehteile (26, 28) ausgerichtet ist.

3. Vorrichtung nach einem der Ansprüche 1 bis 2, **dadurch gekennzeichnet, dass** die Stirnverzahnungen und die Verzahnung des Antriebsritzels (50) kegelig und/oder als Schrägverzahnung ausgeführt sind.

4. Vorrichtung nach einem der vorhergehenden Ansprüche, **dadurch gekennzeichnet, dass** der Stellantrieb (54) mit seinem Gehäuse (56) an einem zur Drehachse (30) der Drehteile (26, 28) achsparallel ausgerichteten Ausleger (40) des Trägerteiles (24) befestigt ist.

5. Vorrichtung nach Anspruch 4, **dadurch gekennzeichnet, dass** das Trägerteil (24) und das Führungsteil (22) des Radträgers (12) mit jeweils zwei achsparallel und diametral gegenüberliegenden Auslegern (38, 40, 42, 44) ausgeführt sind, die umfangsversetzt, bevorzugt um 90 Grad umfangsversetzt, zueinander ausgerichtet sind und an denen über Lagerbolzen (46) ein Stützring (48) kardanisch angelenkt ist.

6. Vorrichtung nach Anspruch 5, **dadurch gekennzeichnet, dass** die Antriebswelle (52) des Stellantriebs (54) durch einen der Ausleger (40) und/oder den Stützring (48) hindurchgeführt ist.

7. Vorrichtung nach Anspruch 6, **dadurch gekennzeichnet, dass** die Antriebswelle (52) des Stellantriebs (54) in dem Ausleger (40) und/oder dem Stützring (48) drehbar gelagert ist.

8. Vorrichtung nach Anspruch 6 oder Anspruch 8, **dadurch gekennzeichnet, dass** die Antriebswelle (52) weiter einen der Lagerbolzen (46) für den Stützring (48) bildet.

9. Vorrichtung nach einem der vorhergehenden Ansprüche, **dadurch gekennzeichnet, dass** die Drehteile (26, 28) über radial nach innen ragende Flanschabschnitte (26b, 28b) an dem Trägerteil (24) und an dem Führungsteil (22) angeordneten Achsstummeln (34, 36) drehbar gelagert sind, wobei die Flanschabschnitte (26b, 28b) durchmessergrößere Ringbunde (34a, 36a) der Achsstummel (34, 36) hintergreifen.

## Claims

1. Device for adjusting the camber and/or toe of the wheels of a wheel suspension (10), in particular for motor vehicles, comprising a hub carrier (12) on which each wheel (20) is rotatably mounted and which comprises a carrier part (24) receiving the wheel (20) and a guide part (22) connected to the wheel suspension (10), between which two rotating parts (26, 28) are arranged, which parts can be actuated by means of an actuating device and can be rotated about an axis of rotation (30), and cause a defined displacement of the carrier part (24) and/or the guide part (22) in order to change the camber and/or toe during the rotational actuation thereof, a single actuator (54) being provided to actuate the rotating parts (26, 28), by means of which actuator the two rotating parts (26, 28) can simultaneously be adjusted in different directions, in particular in opposite directions, the actuator (54) being formed by a servomotor, in particular by an electric motor, **characterised in that** the rotating parts (26, 28) comprise inclined, slanted surfaces (26a, 28a) facing each other, and **in that** the slanted surfaces (26a, 28a) are arranged at a defined distance (s) to each other and are each provided with a spur toothing, into which a drive pinion (50) of the servomotor (54) protrudes and engages with the two spur toothings..

2. Device according to claim 1, **characterised in that** the actuator (54) comprises a driveshaft (52) carrying the drive pinion (50), the driveshaft being oriented substantially perpendicular to the axis of rotation (30) of the rotating parts (26, 28).

3. Device according to either claim 1 or claim 2, **characterised in that** the spur toothings and the toothing of the drive pinion (50) have a conical configuration and/or are configured as a helical gearing.

4. Device according to any of the preceding claims, **characterised in that** the housing (56) of the actuator (54) is attached to an extension (40) of the carrier part (24) which is oriented axially parallel with respect to the axis of rotation (30) of the rotating parts (26, 28).

5. Device according to claim 4, **characterised in that** the carrier part (24) and the guide part (22) of the hub carrier (12) each comprise two axially parallel and diametrically opposed extensions (38, 40, 42, 44) which are oriented with a circumferential offset, preferably with a circumferential offset of 90 degrees, with respect to each other, and on which extensions a support ring (48) is gimbal-mounted via bearing bolts (46).

6. Device according to claim 5, **characterised in that** the driveshaft (52) of the actuator (54) passes through the extension (40) and/or the support ring (48).

7. Device according to claim 6, **characterised in that** the driveshaft (52) of the actuator (54) is rotatably mounted in the extension (40) and/or the support ring (48).

8. Device according to either claim 6 or claim 8, **characterised in that** the driveshaft (52) also forms one of the bearing bolts (46) for the support ring (48).

9. Device according to any of the preceding claims, **characterised in that** the rotating parts (26, 28) are rotatably mounted on the carrier part (24) and on the stub axles (34, 36) arranged on the guide part (22) by means of radially inwardly projecting flange portions (26b, 28b), the flange portions (26b, 28b) engaging behind the ring shoulders (34a, 36a) of the stub axles (34, 36), said ring shoulders having a greater diameter than the flange portions.

## Revendications

1. Dispositif de réglage du carrossage et/ou du parallélisme des roues d'une suspension (10), en particulier pour véhicules automobiles, comprenant un support de roue (12), sur lequel est montée à rotation la roue respective (20) et qui présente une partie de support (24) recevant la roue (20) et une partie de guidage (22) reliée à la suspension (10), entre lesquelles parties sont agencées deux parties rotatives (26, 28) qui peuvent être commandées au moyen d'un dispositif de commande et qui peuvent tourner autour d'un arbre de rotation (30), lesquelles parties rotatives induisent lors de leur commande en rotation un décalage défini de la partie de support (24) et/ou de la partie de guidage (22) pour modifier le carrossage et/ou le parallélisme, dans lequel il est prévu un seul mécanisme de commande (54) pour la commande des parties rotatives (26, 28), au moyen duquel mécanisme les deux parties rotatives (26, 28) peuvent être réglées simultanément dans un sens différent, en particulier dans un sens opposé, dans lequel le mécanisme de commande (54) est formé par un moteur de commande, en particulier par un moteur électrique, **caractérisé en ce que**
les parties rotatives (26, 28) présentent des faces obliques inclinées (26a, 28a) tournées l'une vers l'autre et
les faces obliques (26a, 28a) sont aménagées à une distance définie (s) l'une de l'autre et sont pourvues de respectivement une denture droite, dans laquelle s'engage un pignon menant (50) du moteur de commande (54) qui est en prise avec les deux dentures droites.

2. Dispositif selon la revendication 1, **caractérisé en ce qu'**un arbre d'entraînement (52) - portant le pignon menant (50) - du mécanisme de commande (54) est orienté sensiblement perpendiculairement à l'axe de rotation (30) des parties rotatives (26, 28).

3. Dispositif selon l'une quelconque des revendications 1 à 2, **caractérisé en ce que** les dentures droites et la denture du pignon menant (50) sont conformées en cône et/ou en denture oblique.

4. Dispositif selon l'une quelconque des revendications précédentes, **caractérisé en ce que** le mécanisme de commande (54) est fixé par son boîtier (56) à un bras (40) de la partie de support (24) orienté avec son axé parallèle à l'axe de rotation (30) des parties rotatives (26, 28).

5. Dispositif selon la revendication 4, **caractérisé en ce que** la partie de support (24) et la partie de guidage (22) du support de roue (12) sont conformées avec respectivement deux bras (38, 40, 42, 44) à axes parallèles et diamétralement opposés, qui sont décalés l'un de l'autre en périphérie, de préférence décalés de 90 degrés en périphérie et sur lesquels est articulée par joint à Cardan une couronne d'appui (48) via des axes de palier (46).

6. Dispositif selon la revendication 5, **caractérisé en ce que** l'arbre d'entraînement (52) du mécanisme de commande (54) est passé à travers l'un des bras (40) et/ou la couronne d'appui (48).

7. Dispositif selon la revendication 6, **caractérisé en ce que** l'arbre d'entraînement (52) du mécanisme de commande (54) est monté à rotation dans le bras (40) et/ou dans la couronne d'appui (48).

8. Dispositif selon la revendication 6 ou la revendication 8, **caractérisé en ce que** l'arbre d'entraînement (52) forme en outre un des axes de palier (46) pour la couronne d'appui (48).

9. Dispositif selon l'une quelconque des revendications précédentes, **caractérisé en ce que** les parties rotatives (26, 28) sont montées à rotation via des sections de brides (26b, 28b) tournées radialement vers l'intérieur de tourillons (34, 36) aménagés sur la partie de support (24) et sur la partie de guidage (22), dans lequel les sections de brides (26b, 28b) s'accrochent à des liaisons annulaires (34a, 36a) de plus grand diamètre des tourillons (34, 36).
